# EUROPEAN PATENT APPLICATION

(11) **EP 3 222 352 A1**
(43) Date of publication of application: **27.09.2017**
(21) Application number: 17161957.0
(22) Date of filing: 21.03.2017
(51) Int. Cl.: B01L 3/00

(54) **DEVICE FOR SEALING A REAGENT CONTAINER**

(30) Priority: 21.03.2016 LU 93005
(71) Applicant: Stratec Biomedical AG, 75217 Birkenfeld-Graefenhausen (DE)
(72) Inventor: LUKHAUB, Waldemar, 71665 Vaihingen Enz (DE); TRUMP, Martin, 75180 Pforzheim (DE); ZIMMERMANN, Sara, 75328 Schömberg (DE)
(74) Representative: Tegethoff, Sebastian

(57) **Abstract**

The invention relates to a device for sealing a reagent container storing and providing liquids, in particular in an analyzer system. The invention also relates to a reagent container using such device for sealing, a cartridge for holding such reagent container, and a method for removing a liquid from such reagent container. The instant invention provides a device for sealing a reagent container comprising an annular member configured to be inserted into the reagent container, wherein the annular member is configured to being movably coupled to the reagent container relative to its longitudinal center axis; an opening passing from a top end of the annular member to a bottom end of the annular member; and a sealing element arranged between the top end and the bottom end of the annular member for sealing the opening.

## Description

### Field of the invention

The field of the invention relates to a device for sealing a reagent container storing and providing liquids, in particular in an analyzer system. The invention also relates to a reagent container using such device for sealing, a cartridge for holding such reagent container, and a method for removing a liquid from such reagent container.

### Background of the invention

Automatic analyzer systems in clinical diagnostics and life science have to be supplied with different reagents to run biochemical processes. The reagents are usually stored in consumable bottles, containers, or vials. The reagent containers can be of different sizes and are transported into the analyzer system on a rack. In general, the cover of each of the reagent containers has to be removed prior to loading into the analyzer system. Thus, the reagent containers are in an open state in the analyzer system. As a result, due to open state of the reagent containers, the reagent evaporates and the concentration of the reagents changes, which may adversely affect the analysis.

Typical reagent containers are sealed with a foil or film. The foil is punctured by a pipettor when approaching the reagent container for the first time. Thus, the opening size can be as small as the diameter of a needle of the pipettor. Alternatively, the foil can be removed by a user prior inserting the particular reagent container into the analyzer system. Consequently, with foil sealed reagent containers, an open state is always present while being in the analyzer system. Since the entire surface of the contained liquid is in contact with the environment, the reagent may evaporate on the entire surface. Thus, with foil sealed reagent containers, a minimization of evaporation is not optimal. When pipetting the foil, only disposable needle tips are used, since a contact between the foil and the whole needle of the pipettor can not be avoided. When using pipettors with fixed needles, a cleaning of the whole needle is inevitable after every use. Such cleaning process is time-consuming, costly, and wastes a lot of cleaning fluid.

Further, an elastic septum can also be used for sealing the reagent container, which is attached to a lid of the container. This septum has either an opening gap or a predetermined point (i.e., breaking point), which opens when pipetting the reagent container for the first time. The opening gap or breaking point is usually formed as a line, a cross, or a star. The opening gap of the septum is not completely closed after pipetting the reagent container for the first time. However, due to the elasticity of the material used, the septum closes almost completely, when the needle of the pipettor is removed from the reagent container. The reagents are thus largely protected from evaporation. Again, with an elastic septum used for sealing the reagent container, a contact between the whole needle of the pipettor and the septum can not be avoided. Also, when using reusable needles (i.e., pipettors with fixed needles), a cleaning of the whole needle is inevitable after every use. Such cleaning process is time-consuming, costly, and wastes a lot of cleaning fluid.

A combination of an elastic septum and an opening mechanism is also known for sealing reagent containers, wherein the opening mechanism is attached to the lid of the reagent containers. The lid has an annular wedge-shaped part, by which the septum can be spread. The lid including the wedge-shaped part is biased by a coil spring in an upper position, in which the septum is closed. By pressing the lid against the biasing force of the coil spring towards a lower position, the septum is spread. Thus, the opening of the septum is not accomplished by the needle of the pipettor, but by the lid itself. The needle itself is thus not in contact with the septum. If the resistance holding the lid in the lower position is removed, the lid returns to the upper position by the biasing force of the coil spring. The septum is closed again. However, the opening mechanism for actuating the lid of the reagent container in a pipettor having three axes has a complex structure. Since the reagent containers are located in a single position in the analyzer system, a separate drive unit for opening and closing the elastic septum is necessary.

It is also common to use a folding or sliding mechanism for opening the lid of a reagent container in the analyzer system. These configurations are normally used with analyzer systems having the reagent containers arranged in a carousel. In such an arrangement, the pipettor is usually located at a fixed position and the reagent containers are rotated into the respective position below the pipettor by a rotational drive of the carousel. Within the rotational movement of the reagent container towards or away from the pipettor, the lid can be pushed against a fixed stop for actuating the folding or sliding mechanism of the lid into an opening or closing state. Thus, in a rotational loading system, the fixed stop can be arranged before the fixed pipettor, which causes an opening of the lid, and/or after the fixed pipettor, which causes a closing of the lid. Such folding or sliding mechanism for opening and closing the lid of a reagent container in the analyzer system is described, for example, in the European patent application EP 0 909 584 A2. However, with the one-time opening of the reagent container, for example during the loading and removal of the reagent containers from the analyzer system, evaporation of the reagents can not be prevented. Further, for an analyzer system having a pipettor system with three axes, the above can not be applied. For such a pipettor, since the reagent containers are located at one position, the lid can not be pushed against the fixed stop. Thus, an additional drive concept is necessary. As a result, the analyzer system becomes even more complex.

A further example for sealing a reagent container is disclosed in the publication of U.S. patent application US 2011/0293478 A1. Therein, a tube is inserted into a reagent container. The tube includes in its top portion an annular rim for bearing on the top end of the neck of the reagent container and means for centering in the neck of the reagent container. The tube has on its upper and lower end a slot, respectively. A suction needle is brought over the reagent container, so as to lie on the axis of the reagent container, and it is lowered into the container through the inserted tube close to the bottom thereof. The slot at the upper end of the tube enables an air flow between the neck of the reagent container and the annular rim, thereby enabling air to enter into the container while the reagent is being sucked up from the reagent-taking needle. In order to facilitate taking reagent from the container, the bottom end of the tube includes the lower slot through which reagent passes. With the lower slot of the tube, the liquid can be drawn in, and with the upper slot of the tube, the necessary pressure exchange can take place. By providing a tube inserted in the reagent container, the surface of the liquid, which is in contact with the environment, can be minimized. However, the reagents are not completely protected from evaporation, since the surface of the liquid contacting the environment is merely minimized. Indeed, the reagent located in the tube can evaporate and may cause a difference in the concentration of the reagent.

### Object of the invention

It is an object of the invention to reduce the evaporation of a liquid in a reagent container during the whole lifetime.

### Summary of the invention

The instant invention provides a device for sealing a reagent container comprising an annular member configured to be inserted into the reagent container, wherein the annular member is configured to being movably coupled to the reagent container relative to its longitudinal center axis; an opening passing from a top end of the annular member to a bottom end of the annular member; and a sealing element arranged between the top end and the bottom end of the annular member for sealing the opening, wherein the sealing element is formed as a flexible septum and configured to be penetrable by a needle tip of a suction needle.

It is intended that the opening may have a conical shape, its smaller diameter end being at the bottom end of the annular member. The opening may be configured for abutting a bevel portion of a suction needle.

It is further envisaged the sealing element is configured to be penetrable by a needle tip of the suction needle. The sealing element can be formed as a flexible septum.

The annular member may have at least one recess, wherein the at least one recess can be formed at the outer circumferential surface of the annular member. The annular member may have an outer diameter slightly smaller than an inner diameter of the reagent container.

Another object of the present invention is a reagent container for storing and providing liquids, in particular in an analyzer system, comprising the device as described above that can be movably coupled to the reagent container relative to its longitudinal center axis; a main body; and a collar having an outlet, wherein the outlet including a guiding portion for guiding a suction needle into the inner of the reagent container.

The reagent container may further have a bottom end of the main body of the reagent container that is conically shaped.

A cartridge for holding of at least one reagent container as described above is a further object of the instant invention.

The invention relates further to a method for removing a liquid from a reagent container as described above, in particular in an analyzer system, comprising the steps of moving a suction needle downwards; guiding the suction needle by a guiding portion into an opening of an annular member of a device for sealing the reagent container; penetrating a sealing element that is a flexible septum with a needle tip of the suction needle; abutting a bevel portion of a suction needle with the opening of the annular member; pushing the annular member downwards, which is movably coupled to the reagent container relative to its longitudinal center axis, until the needle tip reaches the liquid stored in the reagent container; and taking liquid from the reagent container by the suction needle.

### Summary of the figures

The invention will now be described on the basis of figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention. It shows:
- Figure 1A: Cross-sectional view of a reagent container in accordance with a first embodiment;
- Figure 1B: Cross-sectional view of the reagent container illustrated in Figure 1A additionally showing an inserted suction needle;
- Figure 1C: Cross-sectional view of a reagent container in accordance with another aspect of the invention;
- Figure 2A: Cross-sectional view of a reagent container in accordance with a second embodiment;
- Figure 2B: Top view of the reagent container illustrated in Figure 2A;
- Figure 3A: Cross-sectional view of a reagent container in accordance with further aspect of the invention;
- Figure 3B: Cross-sectional view of the reagent container illustrated in Figure 3A additionally showing the removing of liquid by the suction needle.
- Figure 4A: Perspective side view of a cartridge for holding at least one reagent container as illustrated in Figure 1C;
- Figure 4B: Cross-sectional view of the cartridge illustrated in Figure 4A;
- Figure 5A: Perspective side view of a reagent container in accordance with another aspect of the invention;
- Figure 5B: Cross-sectional view of the reagent container illustrated in Figure 5A without showing the inserted suction needle;
- Figure 5C: Cross-sectional view of the reagent container of in Figure 5A;
- Figure 6A: Cross-sectional view of a reagent container in accordance with another aspect of the invention; and
- Figure 6B: Cross-sectional view of the reagent container illustrated in Figure 6A additionally showing the inserted suction needle.

### Detailed description of the invention and the figures

The invention provides a device for sealing a reagent container, which is used in automatic analyzer systems. The device is configured such that the evaporation of the reagent is reduced during the whole lifetime. The lifetime includes the transport of the reagent in the container or vial from a producer to a user and the storage by the user. The invention provides a reduction of the evaporation of the reagent in the container after the first use. In some cases, the containers with the reagents remain over months in the automatic analyzer systems. In other cases, the containers are stored in fridges outside of the automatic analyzer systems.

The device for sealing the reagent container or vial may include an annular member or lid, which is configured to be inserted into the reagent container. The annular member is movably coupled to the container relative to its longitudinal center axis. The device may also include a sealing element arranged at a bottom end of the annular member. The sealing element can be formed as a flexible septum. The annular member may have an opening formed as a conical shape, wherein its smaller diameter end abuts with a bevel portion of a pipettor needle. The diameter of the tip of the pipettor needle is configured to be smaller than the smaller diameter end of the conical-shaped opening of the annular member. This configuration allows only the needle tip passing through the opening of the annular member. Since only the tip of the pipettor needle is exposed to the reagent during the following withdrawal thereof, the washing process of a non-detachable tip (e.g., a steel tip) is simplified. However, with this invention also disposable tips can be used.

The annular member is held by sticking friction between the annular member and the reagent container. When the pipettor needle is moved into the annular member, in particular into the opening, at slow speed, the tip of the needle opens the flexible septum and reaches downwards until the bevel portion of the needle abuts with the end of the opening. If the pushing force amount of the needle is greater that the sticking friction between the annular member and the reagent container, the annular member is moved downwards by the bevel portion of the needle. If the needle tip reaches the liquid surface, the pipettor needle will stop the movement. After a desired amount of reagent has been removed (i.e., after the sucking process of the pipettor needle) the needle is again moved upwards and the flexible septum closes. The annular member remains in its position due to the sticking friction between the annular member and the reagent container. The annular member may be moved in that way that it stays always above the reagent level with an air gap between the annular member and the liquid level of the reagent. During the transport or storage of the reagents containing magnetic beads, these beads may stick on the annular member or on the inner circumferential surface of the container. Due to the air gap provided between the movable annular member and the liquid surface, little shaking of the reagent container or vial will bring the beads back into the liquid.

The reagent container may comprise a collar or top portion having an outlet with a guiding portion, wherein the guiding portion is configured to guide the pipettor needle into the inner of the reagent container. The reagent container or annular member may comprise further a cap or foil-coating for sealing the reagent container before first use or for storing. As a result, the reagent in the container is covered by the movable device during the whole lifetime. A further advantage of the completely sealed reagent container is that the container can be rotated without any loss of liquid. Since all components of the above reagent container are formed with a low complexity, there is a high potential of saving costs if produced in high volume. The bottom of the reagent container may be formed as a cone for reducing dead volume. Further, the reagent container may comprise at least one foot element at its end portion for placing the reagent container in an upright position.

The invention relates also to a device for sealing a reagent container or vial having an annular member, which may be configured to float at the liquid surface of the reagent in the container or lid. In this alternative approach of the invention, the annular member is also movably formed, wherein the reagent container may comprise at least three ribs to stabilize the annular member and to keep the annular member in position. The annular member may have the form of a floating ring or floating cover having at least three recesses for accommodating the at least three ribs of the reagent container. The annular member also includes an opening where the pipettor needle is to be inserted. A flexible septum may be fixed on top of the annular member covering the opening. The reagent container or annular member may comprise further a cap or foil-coating for sealing the reagent container before first use or for storing. As a result, the reagent in the container is covered by the movable device during the whole lifetime. A further advantage of the completely sealed reagent container is that the container can be rotated without any loss of liquid. Since all components of the above reagent container are formed with a low complexity, there is a high potential of saving costs if produced in high volume.

The invention relates also to a cartridge for holding at least one reagent container. The cartridge is configured such that the at least one container with its collar or top portion can be placed in an upright position for enabling a support for upright handling.

The invention further relates to a device or cap for sealing a reagent container or bottle, where the reagent is filled in a bag with no air inside. On the upper side of the bag there is a cap. The cap has at least two parts, a movable part fixed at the bag and a second part, which is movably coupled with the fixed part. The moveable part may comprise an opening for inserting the pipettor needle. Small drill holes or notches may be connect the opening and the outside of the movable part of the cap. The movable part may be held in closed position by a spring. In this positon, the drill holes are covered by the fixed part of the cap. If the needle tip drives downwards the moveable part will be pushed downwards. In the lower position there is a liquid connection between pipettor needle and bag content via the drill holes inside the movable cap. In this position, the liquid can flow through the hole into the aspirating pipettor needle. When the needle moves upwards, the cap will be closed by the spring. As a result, the reagent in the container is covered by the cap during the whole lifetime. Further advantages of the completely sealed reagent container are that the container or bottle does not need a separate sealing member, for example a septum, and that the container or bottle can be rotated.

In a further approach, the invention relates to a lid, which is clamped inside the reagent container or vial. The lid may be placed above the liquid level of the reagent. The lid may comprise a basin, which is filled with liquid through at least one hole formed in the basin. The pipettor moves the needle tip inside the basin to aspirate the liquid. The tip pushes the lid downwards. This may be done before, after or during the aspiration process. During the movement, the reagent can flow through the at least one hole into the basin. As a result, the reagent in the container is covered by the lid during the whole lifetime. Further advantages of the completely sealed reagent container are that the container or bottle does not need a separate sealing member, for example a septum.

The invention further relates to a device having a cap with a flexible material, which is fixed on the top of a reagent container or vial, or bottle. The cap may have a hole with a bevel section. The Diameter of the hole is smaller than the diameter of the pipettor needle. The needle stretches the hole. The pipettor aspirates the reagent through a tube. The cap may comprise a small gap for pressure equalization. The tube may comprise a valve to reduce evaporation of the liquid. In another approach, the above mentioned cap can also be formed with a piston pump.

The advantages of the invention of the present disclosure can be summarized as follows:
a. The reagent is covered by the movable device during the whole lifetime. Hence, evaporation of the liquid filled in the reagent is reduced.
b. The invention can be used with disposable tips and steel tips.
c. The washing process of the tip is simplified. It is only a tip washing process necessary, because there is only the needle tip in contact with the reagent.
d. Depending on the embodiment, during the transport or storage of reagents containing magnetic beads, these beads may stick on the lid or elsewhere. As there is just a small air gap between lid and liquid, little shaking of the vial will be enough to bring the beads back into the liquid.
e. The vial can be rotated without any loss of liquids.
f. Several bottle sizes can be combined with this solution.
g. Cheap components if produced in high volume.
h. The device can be combined with another lid or foil on the top of the vial for storing in the fridge.
i. The reagent container can be placed on a horizontal surface.
j. The reagent container can be positioned in a cartridge in an upright position.
k. The dead volume of the reagent container can be reduced by providing a cone-shaped bottom of the reagent container.
l. Elimination of evaporation of the reagents to improve assay performance and stability of the analysis.
m. From a manufacturer or distributor perspective, it generates benefits in marketing and customer satisfaction. From a consumer or user perspective, this reduces costs.

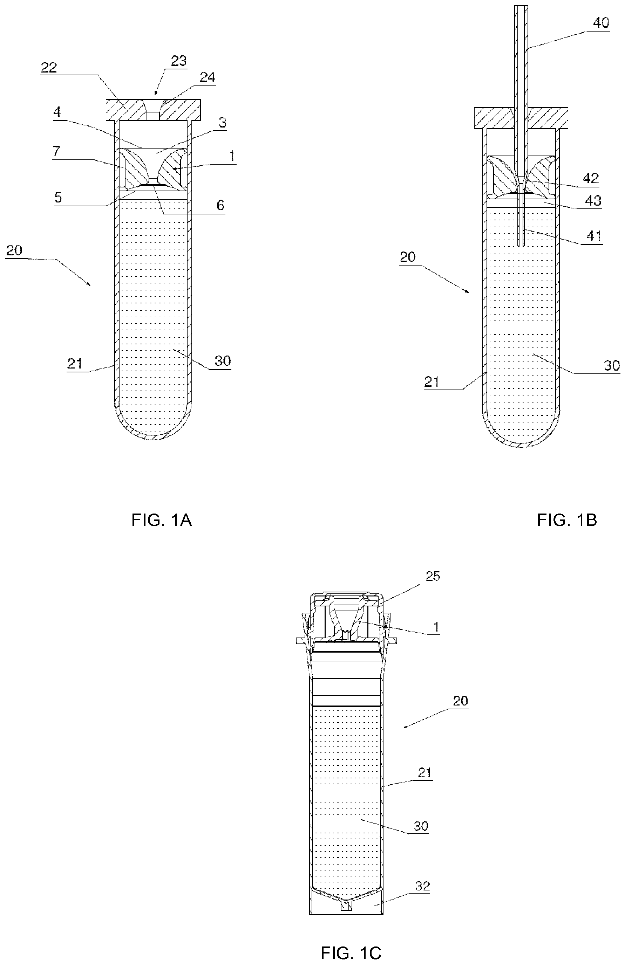

Figure 1A shows a cross-sectional view of a device 1 in accordance with a first embodiment for sealing a reagent container 20 (e.g., a vial, or a bottle) for providing and storing liquids 30 (i.e., reagents), in particular in an analyzer system (not shown). The reagent container 20 has a main body 21 and a collar 22 having an outlet 23. The collar 22 can be integrally formed with the main body 21 or can be a separate member thereof. The outlet 23 is formed as a through hole having a guiding portion 24 on its top end. The guiding portion 24 can be formed as a bevel. The guiding portion 24 is configured to guide a suction needle 40 or pipettor needle through the outlet 23 into the inner of the reagent container 20. The top of the reagent container 20 may comprise an additional cap or foil-coating for sealing the reagent container 20 before first use.

As can be seen in Fig. 1A, an annular member is clamped into the reagent container 20 and is held in position by sticking friction between the annular member and the reagent container 20. Due to the sticking friction, the annular member is configured to be movably coupled to the reagent container 20 relative to its longitudinal center axis. The annular member may have at least one recess 7 formed at the outer circumferential surface of the annular member free of contact with the main body 21 of the reagent container 20 for adapting (e.g., reducing) the sticking friction between the annular member and the main body 21 of the reagent container 20.

As can be seen further in Fig. 1A, the annular member has an opening 3 passing from a top end 4 of the annular member to a bottom end 5 of the annular member. The opening 3 has a conical shape, its smaller diameter end being at the bottom end 5 of the annular member. The smaller diameter end of the opening 3 is axially centered with the outlet 23 of the collar 22 of the reagent container 20 for the perpendicular insertion of the suction needle 40. Due to its smaller diameter end, the opening 3 is configured for abutting a bevel portion 42 of the suction needle 40 (pipettor needle), which has a larger diameter than a tip 41 of the suction needle 40 (i.e., pipettor needle). The device 1 further comprises a sealing element 6, which is arranged between the top end 4 and the bottom end 5 of the annular member. In particular, as can been seen in Fig. 1A, the sealing element 6 is arranged at the bottom end 5 covering the smaller diameter end of the opening 3 for sealing. The sealing element 6 can be formed of a flexible material, which can be penetrated by the needle tip 41 of the suction needle 40. The sealing element 6 can be formed as a flexible septum.

Figure 1B shows the suction needle 40 already inserted into the reagent container 20 in its positions for removing liquid 30 from the reagent container 20. In particular, for removing the liquid 30 from the reagent container 20, for example in the analyzer system (not shown), the suction needle 40 (pipettor needle), the outlet 23 of the reagent container 20 will be positioned below in the suction needle 40 or the suction needle 40 will be positioned above the outlet 23 of the reagent container 20. The suction needle 40 will be moved downwards, at slow speed, into the outlet 23 and the guiding portion 24 will guide the suction needle 40 into the inner of reagent container 20 further down until the opening 3 of the annular member of the device 1. As the suction needle 40 is moved further downwards, the needle tip 41 of the suction needle 40 will penetrate the sealing element 6 (i.e., the flexible septum). After penetrating the sealing element 6 with the needle tip 41, the bevel portion 42, which has a larger diameter than the needle tip 41, will abut the smaller diameter end of the opening 3 formed in the annular member of the device 1. The suction needle 40, in particular the bevel portion 42 thereof abutting the smaller diameter end of the opening 3, pushes the annular member downwards until the needle tip 41 reaches the surface of the liquid 30. When the needle tip 41 reaches the surface of the liquid 30 the suction needle 40 stops the movement and an air gap 43 is defined between the annular member and the surface of the liquid 30 (see position in Fig. 1B). After sucking the liquid 30 by the suction needle 40 (sucking process), the suction needle 40 including its needle tip 41 leaves the annular member and the reagent container 20. After passing the flexible septum (i.e., sealing element 6), the septum closes and the reagent container 20 is again completely covered.

Figure 1C shows another aspect of the present invention showing the device 1 placed in a cap 25, which is mounted into the opening portion of the reagent container 20 as a unitary element. The cap 25 is in a preassembled condition in a state where the device 1 is already inserted into the cap 25. Further, as can be seen in Figure 1C, the bottom of the reagent container 20 is formed as a cone for reducing dead volume of the liquid 30. Further, the reagent container 20 comprise at least one foot element 32 at its end portion for placing the reagent container 20 in an upright position on a horizontal surface.

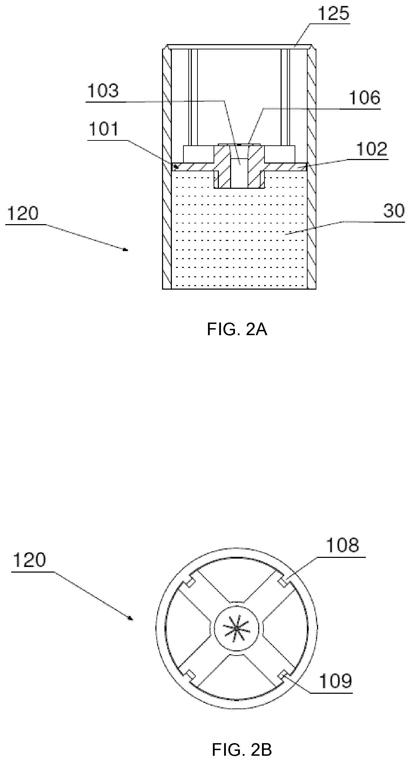

Figure 2A shows a cross-sectional view of a device 1 in accordance with a second embodiment showing a reagent container 120 (e.g., a vial, or a bottle) for providing and storing liquids 30 (i.e., reagents), in particular in an analyzer system (not shown). The reagent container 120 has a main body 121 and a cap 125 or a foil-coating for sealing the reagent container 120 before first use. As can be seen in Fig. 2A, a device 101 having an annular member 102 is inserted into the reagent container 120 and is configured to float at the surface of the liquid 30 of the reagent container 120. The annular member 102 may have the form of a floating ring or floating cover. The annular member 102 may have an outer circumferential diameter, which is slightly smaller than the inner diameter of the reagent container 120. The main body 121 of the reagent container 120 may comprise at least three ribs 108 arranged opposite to each other with respect to the longitudinal center axis of the main body 121. The at least three ribs 108 projecting from the inner circumferential surface of the main body 121 of the reagent container 120 (see Figure 2B). The annular member 102 comprises at least three recesses 109 for accommodating the at least three ribs 108 (see Figure 2B). Hence, the device 101 and the main body 121 of the reagent container 120 are aligned with each other. The annular member 102 also includes an opening 103 where the pipettor needle is to be inserted. As a sealing element 106, a flexible septum may be fixed on top of the annular member 102 covering the opening 103.

Figure 2B shows a top view of the reagent container 120 illustrated in Fig. 2A showing the ribs 108 of the main body 121 and the recesses 109 of the annular member 102 in more detail. As can be seen in Fig. 2B, four ribs 108 are circularly arranged on the inner circumferential surface of the main body 121in equal intervals to each other. The at least three ribs 108 are configured such that they are accommodated by the at least three recesses 109 formed on the annular member 102 of the device 101 for keeping the device 101 on the surface of the liquid 30 in an approximately horizontal position.

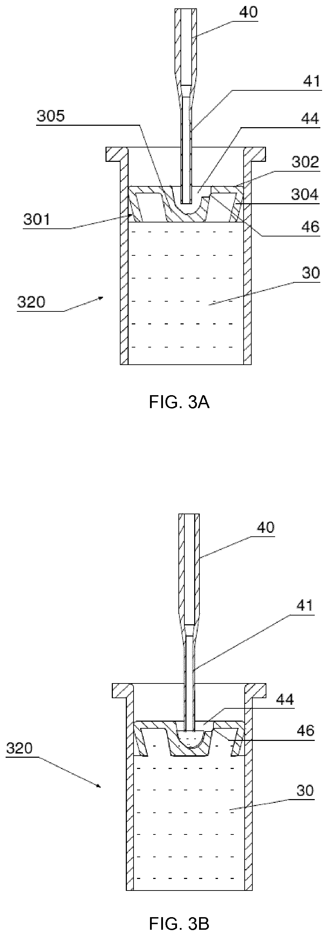

Figure 3A shows a cross-sectional view of a device 301 for sealing a reagent container 320 or bottle in accordance with a further aspect of the present invention. The device 301 comprises an annular member 302 or lid having an outer portion 304 and an inner portion 305. The outer portion 304 of the annular member 302 is clamped inside the reagent container 320. The device 301 is placed above the surface of the liquid 30. The inner portion 305 of the annular member 302 has a cup shape and is formed as a basin 44. At least one hole 46 is formed between the inner portion 305 and the basin 44. A suction needle 40, in particular a needle tip 41, is moved into the basin 44.

As can be seen in Fig. 3B, the basin 44 is in fluid communication with the inner of the reagent container 320 via the at least one hole 46. The suction needle 40 (i.e., pipettor) is placed above the device 301 and is moved downwards until the needle tip 41 of the suction needle 40 reaches the basin 44 filled with liquid 30. The suction needle 40 aspirates the liquid 30 from the basin 44. If the liquid 30 in the reagent container 320 reaches a liquid level where no liquid 30 can be drawn into the basin 44, the suction needle 40 is moved downwards and pushes the annular member 302 until the basin 44 is again filled with liquid 30 via the at least one hole 46. The pushing of the suction needle 40 can be done before, after or during the aspiration process of the suction needle 40.

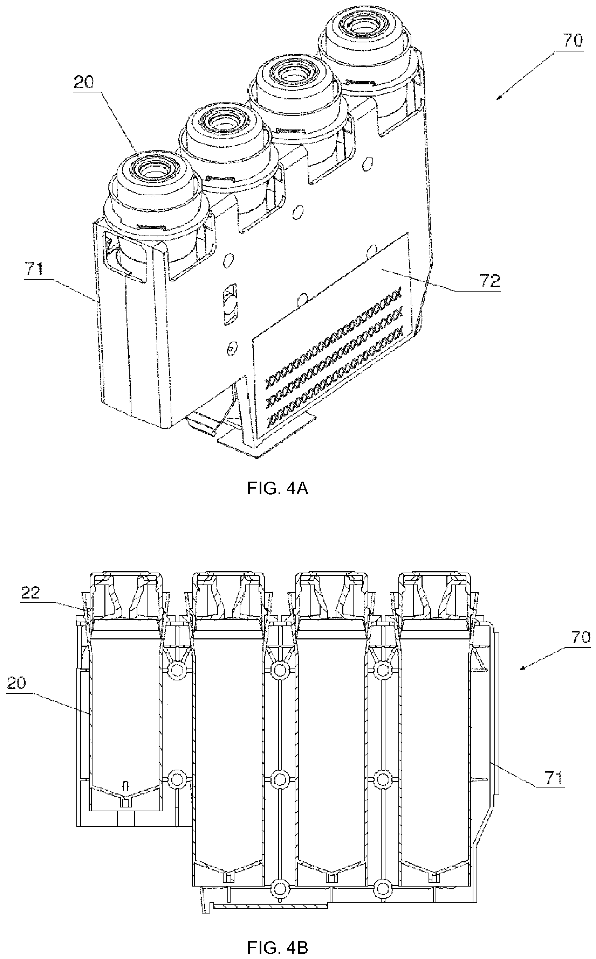

Figure 4A shows a perspective side view of a cartridge 70 for holding at least one reagent container 20 as illustrated in Figure 1C. The cartridge 70 comprises a housing 71 with openings for accessing the inserted reagent containers 20 by the suction needle (not shown). The housing 71 may comprise a human readable label 72 regarding the information of the liquid stored in the cartridge 70. The openings may be covered by a foil (not shown) for sealing the openings, in particular the reagent containers 20 placed inside the housing 71, before first use. The housing 71 may be configured such that the housing 71 is formed as a two-part housing having two housing components, which are, for example, connected to each other by folding means, wherein one of the housing components is folded onto the other one of the housing components after the reagent containers 20 are inserted into one of the housing components. However, the present invention is not limited thereto, the two housing components can be connected by other means if necessary and/or desired for providing a re-closeable system.

Figure 4B shows a cross-sectional view of the cartridge illustrated in Figure 4A. The reagent containers 20 can be stored into the cartridge 70 in an upright position by placing the collar 22 of the reagent container 20 in a suitable snap-in system. Hence, this enables a simple assembly of the reagent containers 20 into the cartridge 70 with no tools required. Since, the reagent containers 20 are stored in the cartridge 70 in an upright position, the handling of the reagent containers 20 can be improved. Hence, a simple and compact design of the cartridge for potential storage racks is created enabling a secondary packaging.

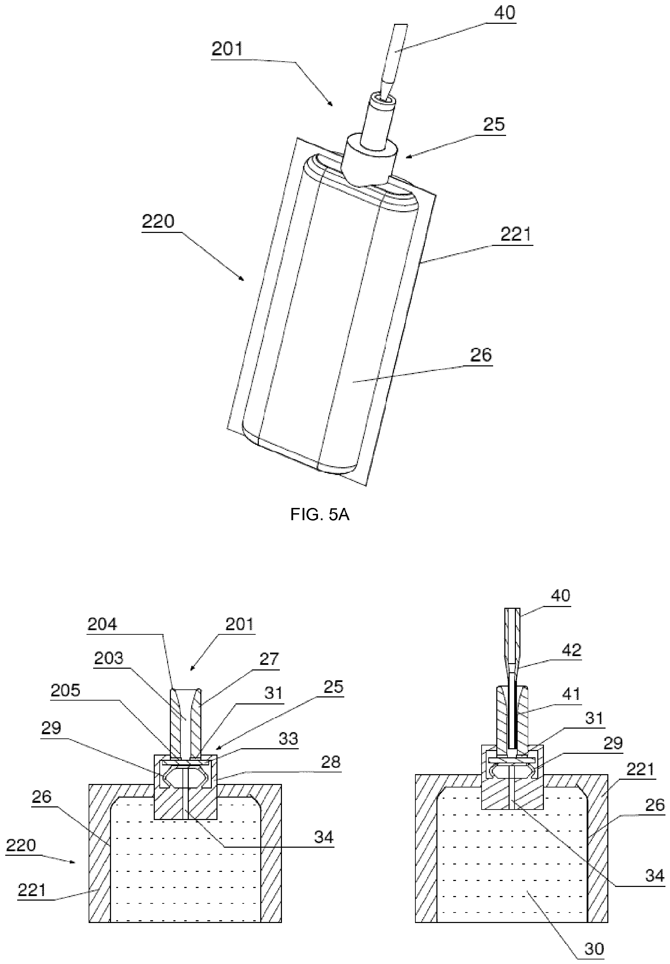

Figure 5A shows a perspective view of a device 201 for sealing a reagent container 220 or bottle in accordance with another aspect of the present invention. The reagent container 220 has a main body 221, which comprises a bag 26 including the liquid 30 with no air inside. The device 201 couples the bag 26 to the reagent container 220 and comprises a cap 25. Figure 5A shows further a suction needle 40, which is inserted into the device 201.

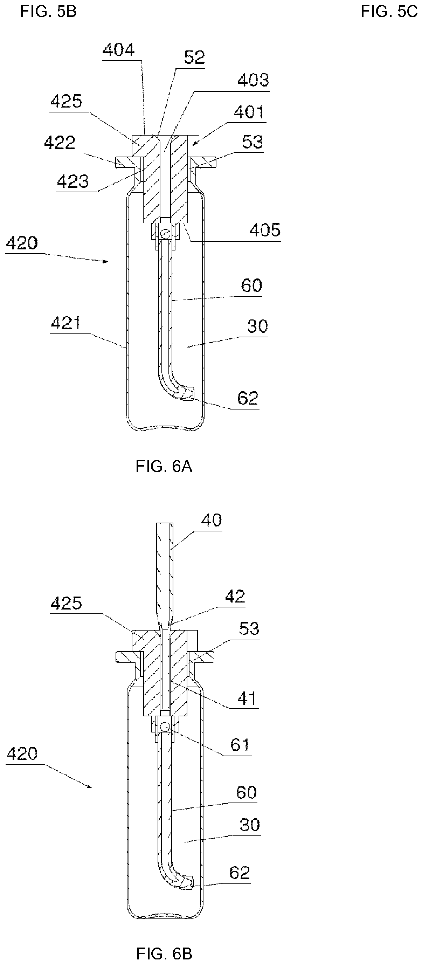

As can be seen in Fig. 5B, the cap 25 has a fixed part 28, which is fixed to the bag 26 and the reagent container 220, and a movable part 27, which is movable coupled along the longitudinal axis of the device 201. The fixed part 28 has a connecting hole 34 connecting the bag 26 with the inner space of the fixed part 28. A spring 29 is arranged in the inner space of the fixed part 28. The movable part 27 has a tubular shape with an opening 203 extending from a top end 204 of the movable part to a bottom end 205. The movable part 27 comprises on its bottom end 205 a stopper 33, which radially projects from the longitudinal axis of the movable part 27. The movable part 27 further comprises at least two notches 31 or drill holes at the bottom end 205. The movable part 27 is movable accommodated with the fixed part 28 and is biased by the spring 29 in a closed position. In the closed position, the stopper 33 abuts with the fixed part 28 and the notches 31 are covered by the fixed part 28 of the cap 25.

Figure 5C is the cross-sectional view of the configuration illustrated in Fig. 5A. Figure 5C shows an opening position, wherein the suction needle 40 (i.e., pipettor) is inserted into the device 201. The suction needle 40 is moved downwards until a bevel portion 42 of the suction needle 40 having a larger diameter than the opening 203 abuts with the top end 204 of the movable part 27 of the cap 25. When the bevel portion 42 abuts the top end 204 of the movable part 27, the suction needle 40 pushes the movable part 27 downwards against the biasing force of the spring 29, wherein the spring 29 is deflected. In this opening position, the needle tip 41 is in fluid communication with the liquid 30 of the bag 26 via the notches 31, the inner space of the fixed part 28, and the connecting hole 34. In the opening position, the liquid 30 can flow through the connecting hole 34, the inner space of the fixed part 28, the notches 31, and the opening 203 into the aspirating needle 40. When the suction needle 40 is moved upwards, the movable part 27 is pushed back in its closed position by the biasing force of the spring 29 and the cap 25 will be closed.

Figure 6A shows a cross-sectional view of a device 401 for sealing a reagent container 420 or bottle in accordance with a further aspect of the present invention. The reagent container 420 comprises a main body 421, a collar 422, and an outlet 423. The device 401 comprises a cap 425 or cover inserted into the outlet 423. The cap 425 is arranged on top of the collar 422 of the reagent container 420. The cap 425 is tubular shaped and has an outer diameter slightly smaller than the diameter of the outlet 423 such that at least one narrow slot 53 or gap is formed between the cap 425 and the reagent container 420. The cap 425 is made from flexible material and comprises an opening 403 extending from a top end 404 to a bottom end 405 of the cap 425. The opening 403 has a bevel section 52 at the top end 404 of the reagent container 420. A tube 60 is mounted at the bottom end 405 of the cap 425. The tube 60 extends basically along longitudinal axis of the reagent container 420. The tube 60 includes an inlet 62 arranged at the distal end thereof.

As can be seen in Fig. 6B, a suction needle 40 is inserted into the flexible cap 425. Since the diameter of the opening 403 is configured to be slightly smaller than the diameter of the suction needle 40, in particular of the needle tip 41, the suction needle 40 (i.e., pipettor) stretches the cap 425. The suction needle 40 aspirates the liquid 30 from the reagent container 420 via the inlet 62 through the tube 60. The at least one narrow slot 53 formed between the cap 425 and the reagent container 420 enables pressure equalization (i.e., ventilation). The tube 60 further comprises a valve 61 to reduce evaporation of the liquid 30. During the aspiration process, the valve 61 is in an opened state.

In accordance with an even further aspect of the present invention, the cap 425 can be replaced by a device, which is formed as a known piston pump.

### Reference Number List

- 1, 101, 201, 301, 401: device
- 102,302: annular member
- 3, 103, 203, 403: opening
- 4, 204, 404: top end
- 5, 205, 405: bottom end
- 6, 106: sealing element
- 7: recess
- 20, 120, 220, 320, 420: reagent container
- 21, 121, 221, 321, 421: main body
- 22, 422: collar
- 23, 423: outlet
- 24: guiding portion
- 25,425: cap
- 26: bag
- 27: movable part
- 28: fixed part
- 29: spring
- 30: liquid
- 31: notch
- 32: foot element
- 33: stopper
- 34: connecting hole
- 40: suction needle
- 41: needle tip
- 42: bevel portion
- 43: air gap
- 44: basin
- 46: hole
- 52: bevel section
- 53: slot
- 60: tube
- 61: valve
- 62: inlet
- 70: cartridge
- 71: housing
- 72: human readable label
- 108: rib
- 109: recess
- 304: outer portion
- 305: inner portion

## Claims

1. A device (1, 101) for sealing a reagent container (20, 120) comprising:
- an annular member (2, 102) configured to be inserted into the reagent container (20, 120), wherein the annular member (2, 120) is configured to being movably coupled to the reagent container (20, 120) relative to its longitudinal center axis;
- an opening (3, 103) passing from a top end (4) of the annular member (2, 120) to a bottom end (5) of the annular member (2, 120); and
- a sealing element (6, 106) arranged between the top end (4) and the bottom end (5) of the annular member (2, 120) for sealing the opening (3, 103), wherein the sealing element (6, 106) is formed as a flexible septum and configured to be penetrable by a needle tip (41) of a suction needle (40).

2. The device (1) according to claim 1, wherein the opening (3) has a conical shape, its smaller diameter end being at the bottom end (5) of the annular member (2).

3. The device (1) according to any one of claim 1 or 2, wherein the opening (3) is configured for abutting a bevel portion (42) of a suction needle (40).

4. The device (1) according to any one of claims 1 to 3, wherein the annular member (2) has at least one recess (7).

5. The device (1) according to claim 4, wherein the at least one recess (7) is formed at the outer circumferential surface of the annular member (2).

6. The device (1) according to any one of claims 1 to 5, wherein the annular member (102) having an outer diameter slightly smaller than an inner diameter of the reagent container (120).

7. A reagent container (20) for storing and providing liquids, in particular in an analyzer system, comprising:
the device (1) according to any one of claims 1 to 6 movably coupled to the reagent container (20) relative to its longitudinal center axis;
a main body (21); and
a collar (22) having an outlet (23), wherein the outlet (23) including a guiding portion (24) for guiding a suction needle (40) into the inner of the reagent container (20).

8. The reagent container (20) according to claim 7, wherein a bottom end of the main body (21) of the reagent container (20) is conically shaped.

9. A cartridge for holding of at least one reagent container (20) according to claim 7.

10. A method for removing a liquid (30) from a reagent container (20) according to any one of claim 7 or 8, in particular in an analyzer system, comprising the steps of:
- moving a suction needle (40) downwards;
- guiding the suction needle (40) by a guiding portion (24) into an opening (3) of an annular member (2) of a device (1) for sealing the reagent container (20);
- penetrating a sealing element (6) that is a flexible septum with a needle tip (41) of the suction needle (40);
- abutting a bevel portion (42) of a suction needle (40) with the opening (3) of the annular member (2);
- pushing the annular member (2) downwards, which is movably coupled to the reagent container (20) relative to its longitudinal center axis, until the needle tip (41) reaches the liquid (30) stored in the reagent container (20); and
- taking liquid (30)from the reagent container (20) by the suction needle (40). ).
